# EUROPÄISCHE PATENTSCHRIFT

(11) **EP 3 482 908 B1**
(45) Veröffentlichungstag und Bekanntmachung des Hinweises auf die Patenterteilung: **09.03.2022**
(21) Anmeldenummer: 17201572.9
(22) Anmeldetag: 14.11.2017
(51) Int. Cl.: B29C 51/26, B29C 51/10, B29C 51/14, B32B 27/16

(54) **UV-BESTRAHLUNGSEINRICHTUNG; ANORDNUNG ZUM THERMOFORMEN; SOWIE VERFAHREN ZUM HERSTELLEN EINES FORMTEILS**
UV IRRADIATION DEVICE; ASSEMBLY FOR THERMOFORMING; AND METHOD FOR PRODUCING A MOULDED PART
UNITÉ DE RAYONNEMENT UV, DISPOSITIF DE THERMOFORMAGE AINSI QUE PROCÉDÉ DE FABRICATION D'UNE PIÈCE MOULÉE

(43) Veröffentlichungstag der Anmeldung: 15.05.2019
(73) Patentinhaber: Geiss AG, 96145 Sesslach (DE)
(72) Erfinder: Geiss, Manfred, 96145 Seßlach (DE)
(74) Vertreter: Isarpatent

(56) Entgegenhaltungen:
- GB-A- 2 241 194
- JP-A- H03 293 105
- DATABASE WPI Week 201005 Thomson Scientific, London, GB; AN 2009-S06108 XP002782080, -& KR 2009 0109755 A (MINUTA TECHNOLOGY) 21. Oktober 2009 (2009-10-21)
- DATABASE WPI Week 199119 Thomson Scientific, London, GB; AN 1991-136432 XP002782081, -& JP H03 73329 A (IKEDA BUSSAN CO) 28. März 1991 (1991-03-28)
- DATABASE WPI Week 200710 Thomson Scientific, London, GB; AN 2007-095400 XP002782082, -& JP 2006 327001 A (SHIN KOBE ELECTRIC MACHINERY) 7. Dezember 2006 (2006-12-07)
- DATABASE WPI Week 201277 Thomson Scientific, London, GB; AN 2012-K17877 XP002782083, -& CN 202 293 578 U (FANG Y) 4. Juli 2012 (2012-07-04)

## Beschreibung

### GEBIET DER ERFINDUNG

Die vorliegende Erfindung bezieht sich auf das Gebiet des Thermoformens von Materialien und hierbei insbesondere auf das Gebiet des Herstellens von Formteilen mit UV-gehärteter Beschichtung, und betrifft eine Anordnung zum Thermoformen sowie ein Verfahren zum Herstellen eines Formteils.

### TECHNISCHER HINTERGRUND

Anordnungen oder Maschinen zum Thermoformen dienen dazu, aus einem Ausgangsmaterial, welches beispielsweise flächig in Gestalt von Kunststofffolien oder Kunststoffplatten bereitgestellt wird, mit Hilfe der Einwirkung von Wärme Formteile herzustellen. Dies kann zum Beispiel in der Weise erfolgen, dass das Material, zum Beispiel ein folien- oder plattenförmiger thermoplastischer Kunststoff, zunächst eingespannt wird, dann mittels einer geeigneten Heizeinrichtung beheizt und dadurch erwärmt wird, und anschließend unter Zuhilfenahme eines geeigneten Formwerkzeugs in die gewünschte Form gebracht wird.

Das Ausgangsmaterial kann mit einer Beschichtung, etwa einem Lack, versehen sein, welche unter Bestrahlung mit ultravioletter Strahlung (nachfolgend als UV-Strahlung bezeichnet) aushärtet. Bei einem herkömmlichen Verfahren zur Herstellung eines Formteils ausgehend von einem derartigen Material schließt sich nach dem Thermoformen und Entformen des umgeformten Materials ein weiterer Arbeitsgang an, in welchem das umgeformte Material mit UV-Strahlung bestrahlt wird, indem das Formteil auf einem Band abgelegt wird und auf diesem unter UV-Strahlern einer separaten Härteanlage hindurchbewegt wird.

Die herkömmliche Vorgehensweise erfordert somit eine Reihe von Arbeits- und Handhabungsschritten, um das fertige Formteil zu erhalten. Zudem erfordert die UV-Bestrahlung bei dem herkömmlichen Vorgehen meist große Vorsicht, um ein erneutes, unerwünschtes Verformen des fertig geformten und oftmals dünnen Materials zu vermeiden.

In der JP H03 73329 A wird die Herstellung eines Verkleidungsteils für ein Fahrzeug beschrieben. Eine Kunststoffschicht wird zur Bildung eines Laminats auf ein Deckmaterial auflaminiert, das Laminat wird für ein Vakuumformen auf einer Form angeordnet, und nach dem Vakuumformen oder im Voraus wird ein photo-aushärtender Kunststoff aufgebracht, welcher zum Aushärten mit ultravioletter Strahlung bestrahlt wird.

Weiterhin wird in der JP 2006 327001 A eine Vakuumformmaschine beschrieben, die eine UV-härtbare Kunststoffschicht gleichmäßig aushärten kann und eine Heizeinrichtung, eine Vakuumformeinrichtung, eine UV-Bestrahlungseinrichtung und eine Kühleinrichtung aufweist. Die Heizeinrichtung dient dem Aufheizen einer Platte, welche eine Thermoplasttafel mit einer darauf befindlichen, halbausgehärteten, UV-härtbaren Kunststoffschicht aufweist. Die Vakuumformeinrichtung bringt die aufgeheizte Platte in eine gewünschte Form, die UV-Bestrahlungseinrichtung bestrahlt die UV-härtbare, halbausgehärtete Schicht mit ultravioletter Strahlung, und die Kühleinrichtung dient dem Kühlen des geformten Werkstücks.

Ferner beschreibt beispielsweise die JP H03-293105 A eine Verstärkungsschicht, die durch Imprägnieren eines verstärkenden Fasermaterials mit einem UV-härtbaren Kunststoff erhalten wird. In der GB 2 241 194 A ist zum Beispiel ein Verfahren zum Spritzgießen von faserverstärktem Kunststoff beschrieben. JP H03-293105 A und GB 2 241 194 A offenbaren beide eine Anordnung zum Thermoformen (und entsprechende Verfahren), mit einer Arbeitsstation, an der ein Material einer Thermoformung unterzogen werden kann, und mit einer UV-Bestrahlungseinrichtung, die dafür eingerichtet ist, eine UV-härtbare Beschichtung des Materials an der Arbeitsstation mit UV-Strahlung zu bestrahlen, um die UV-härtbare Beschichtung des Materials mittels der UV-Strahlung zu härten; wobei die UV-Bestrahlungseinrichtung mit einer bewegbaren Bestrahlungseinheit ausgebildet ist; wobei das Material an der Arbeitsstation unter Verwendung eines Formwerkzeugs der Thermoformung unterzogen werden kann und die UV-Bestrahlungseinrichtung derart ausgebildet und angeordnet ist, dass das Material zum Härten der Beschichtung mittels der UV-Bestrahlungseinrichtung mit der UV-Strahlung bestrahlbar ist, während sich das Material auf dem Formwerkzeug befindet. Ferner kann zum Beispiel in der JP H03-293105 A die Bestrahlungseinheit aus einer Ruhestellung derselben zum Bestrahlen des Materials in einen Arbeitsbereich der Arbeitsstation, in dem die Thermoformung des Materials durchführbar ist, hinein und über das Formwerkzeug mit dem darauf befindlichen Material hinweg bewegt werden, wobei die Bestrahlungseinheit aus seitlicher Richtung direkt über eine Vakuumform bewegt wird.

### ZUSAMMENFASSUNG DER ERFINDUNG

Vor diesem Hintergrund ist es Aufgabe der vorliegenden Erfindung, die Herstellung von Formteilen aus Materialien mit UV-härtbarer Beschichtung hinsichtlich Wirtschaftlichkeit, Zuverlässigkeit und Qualität noch weiter zu verbessern.

Die Lösung dieser Aufgabe gelingt erfindungsgemäß mit einer Anordnung zum Thermoformen mit den Merkmalen des Anspruchs 1 und/oder einem Verfahren mit den Merkmalen des Anspruchs 9.

Erfindungsgemäß wird eine Anordnung zum Thermoformen geschaffen, die eine Arbeitsstation und eine UV-Bestrahlungseinrichtung aufweist. An der Arbeitsstation kann ein Material einer Thermoformung unterzogen werden. Die UV-Bestrahlungseinrichtung ist dafür eingerichtet, eine UV-härtbare Beschichtung des Materials an der Arbeitsstation mit UV-Strahlung zu bestrahlen, um die UV-härtbare Beschichtung des Materials mittels der UV-Strahlung zu härten.

Erfindungsgemäß wird zudem ein Verfahren zum Herstellen eines Formteils bereitgestellt. Das Verfahren umfasst ein Thermoformen eines Materials unter Verwendung eines Formwerkzeugs. Bei dem Verfahren wird eine UV-härtbare Beschichtung des Materials durch Bestrahlen mit UV-Strahlung gehärtet, während sich das Material auf dem Formwerkzeug befindet.

Offenbart wird vorliegend ferner eine UV-Bestrahlungseinrichtung, welche dafür ausgebildet ist, mit einer Arbeitsstation einer Anordnung zum Thermoformen derart zusammenzuwirken, dass eine UV-härtbare Beschichtung eines Materials, das in einem Arbeitsbereich der Arbeitsstation einer Thermoformung unterzogen werden kann, zum Härten der Beschichtung in dem Arbeitsbereich mittels der UV-Bestrahlungseinrichtung mit UV-Strahlung bestrahlbar ist.

Ein Aspekt der Erfindung besteht darin, die Arbeitsgänge einer Thermoformung und einer UV-Härtung nicht räumlich getrennt voneinander, sondern gemeinsam zu realisieren. Indem die Thermoformung und die UV-Härtung bei der Erfindung an ein- und derselben Arbeitsstation durchgeführt werden können, können zusätzliche Handhabungsschritte vermieden werden. Hierdurch kann vorteilhaft eine Steigerung der Effizienz bei der Herstellung von Formteilen erreicht werden. Die Erfindung ermöglicht es zudem, ein Verziehen des oftmals dünnwandigen Formteils bei der UV-Bestrahlung zuverlässig zu vermeiden. Mit der Erfindung kann eine Stützung des Materials durch das Werkzeug ermöglicht werden, wenn sich das Formteil während des UV-Härtevorgangs noch auf dem Formwerkzeug befindet. Somit werden unerwünschte erneute Verformungen bei der UV-Härtung zuverlässiger verhindert. Auf diese Weise kann auch eine signifikante Beschleunigung der UV-Härtung erreicht werden. Mit dem Begriff "UV-Strahlung" soll vorliegend ultraviolette Strahlung bezeichnet werden.

Vorteilhafte Ausgestaltungen und Weiterbildungen der Erfindung ergeben sich aus den Unteransprüchen sowie aus der Beschreibung unter Bezugnahme auf die Figuren der Zeichnung.

Erfindungsgemäß weist die UV-Bestrahlungseinrichtung eine Bestrahlungseinheit auf, wobei die Bestrahlungseinheit bewegbar angeordnet ist. In einer Ausgestaltung ist die Bestrahlungseinheit insbesondere verfahrbar angeordnet. Insbesondere kann in einer Weiterbildung die UV-Bestrahlungseinrichtung mit einer bewegbaren Bestrahlungseinheit, die mindestens eine UV-Strahlungsquelle aufweist, ausgebildet sein. Eine bewegbare Bestrahlungseinheit kann vorteilhaft zeitweise in eine Position gebracht werden, in der sie zum Beispiel während der Thermoformung sowie bei Beschickungs- und Entformvorgängen nicht hinderlich ist.

Insbesondere ist die Bestrahlungseinheit in einer Ausgestaltung translatorisch verfahrbar, wobei die Bestrahlungseinheit zum Beispiel entlang einer Verfahrrichtung insbesondere geradlinig verfahren werden kann. Eine derartige Ausgestaltung ist, gerade bei linearer Verfahrbarkeit, auf relativ einfache Weise und ohne übermäßig komplizierte Mechanik umsetzbar. Alternativ kann jedoch in einer Weiterbildung ein translatorisches Verfahren der Bestrahlungseinheit entlang mehrerer Raumrichtungen vorgesehen sein, wodurch die Bestrahlungseinheit noch flexibler positioniert und bewegt werden kann.

Die Bestrahlungseinheit kann in einer Weiterbildung beispielsweise als ein verfahrbarer Wagen ausgebildet sein. Der Wagen kann zum Beispiel von einem Gestell verfahrbar getragen sein. Auf diese Weise wird ein vergleichsweise einfacher Aufbau der UV-Bestrahlungseinrichtung möglich.

In einer Ausgestaltung ist die UV-Bestrahlungseinrichtung dafür ausgebildet, das Material nach der Thermoformung desselben zum Härten der Beschichtung mit der UV-Strahlung zu bestrahlen. Das bereits thermogeformte Material, welche bereits die erwünschte Geometrie des herzustellenden Formteils aufweist, kann durch Bestrahlen mit der UV-Strahlung somit mit der angestrebten Oberflächenbeschaffenheit versehen werden.

In einer Ausgestaltung wird mittels der UV-Bestrahlungseinrichtung eine allseitige Bestrahlung einer Außenoberfläche des Materials nach dem Thermoformen desselben ermöglicht. Somit kann die UV-härtbare Beschichtung zuverlässig auf allen Seiten des umgeformten Materials gehärtet und zuverlässig ein Formteil hoher Qualität erzeugt werden.

Erfindungsgemäß weist die UV-Bestrahlungseinrichtung ferner mindestens eine längliche UV-Lampe auf, die derart angeordnet ist, dass eine Längsrichtung der UV-Lampe zu einer Verfahrrichtung der Bestrahlungseinheit schräg ausgerichtet ist. Dies erleichtert beispielsweise die UV-Bestrahlung des umgeformten Materials von mehr als einer Seite während eines translatorischen Verfahrens der Bestrahlungseinheit. In anderen Ausgestaltungen ist jedoch die Verwendung von UV-Lampen anderer geometrischer Gestalt ebenfalls denkbar.

In einer Weiterbildung weist die UV-Bestrahlungseinrichtung mehrere längliche UV-Lampen auf, die im Wesentlichen nebeneinander angeordnet sind und deren Längsrichtung jeweils schräg zu der Verfahrrichtung der Bestrahlungseinheit verläuft und die im Betrieb zueinander geneigt UV-Strahlung abstrahlen. Auf diese Weise kann eine möglichst allseitige Bestrahlung der Außenoberfläche des Materials in unkomplizierter Weise erreicht werden, beispielsweise auch dann, wenn Oberflächenabschnitte des Materials vertikal oder nahezu vertikal verlaufen.

Gemäß einer weiteren Weiterbildung strahlt eine mittlere der mehreren UV-Lampen mit ihrer Haupt-Strahlungsabgaberichtung im Wesentlichen normal zu einer Einspannebene der Arbeitsstation, in der das Material für das Thermoformen einspannbar ist, ab, während beidseits der mittleren UV-Lampe angeordnete UV-Lampen jeweils mit ihrer Haupt-Strahlungsabgaberichtung schräg in Bezug auf die Einspannebene abstrahlen.

Beispielsweise kann die UV-Bestrahlungseinrichtung drei UV-Lampen aufweisen. Dies ermöglicht bereits für eine Vielzahl denkbarer Formteile eine allseitige, vollflächige Bestrahlung der Außenoberfläche des Formteils. Andere Anzahlen von UV-Lampen sind jedoch ebenfalls denkbar, beispielsweise eine, zwei oder mehr als drei UV-Lampen.

In einer Ausgestaltung kann die UV-Lampe oder können die UV-Lampen in fester Ausrichtung und/oder Position derselben an der Bestrahlungseinheit angeordnet sein. Eine Bestrahlungseinheit mit einer oder mehreren in dieser Weise angeordneten UV-Lampen ist einfach aufgebaut und robust und vergleichsweise kostengünstig.

Gemäß einer anderen Ausgestaltung kann die UV-Lampe oder können die UV-Lampen verstellbar oder ausrichtbar an der Bestrahlungseinheit angeordnet sein. Insbesondere kann vorgesehen sein, dass die UV-Lampe(n) hinsichtlich des Abstrahlwinkels derselben oder deren Haupt-Strahlungsabgaberichtung durch Verschwenken oder Verdrehen einstellbar ist/sind. Ferner kann alternativ oder zusätzlich in weiteren Ausgestaltungen eine translatorische Einstellbarkeit der UV-Lampe(n) vorgesehen sein. Auf diese Weise können Ausrichtung und/oder Position der UV-Lampen an der Bestrahlungseinheit an die Gestalt des herzustellenden Formteils für eine möglichst gute Bestrahlung angepasst werden.

In weiteren Ausgestaltungen kann eine derartige Verstellung oder Ausrichtung der UV-Lampe(n) manuell oder mit Hilfe zugeordneter Aktuatoren erfolgen. Eine manuelle Verstellung ist relativ einfach realisierbar, während eine Verstellung über Aktuatoren die Möglichkeit bietet, die Einstellung der UV-Lampe(n) über eine Maschinensteuerung vorzunehmen, was den Bedienkomfort und die Einstellgenauigkeit verbessern kann.

Zudem kann in Weiterbildungen vorgesehen sein, dass die UV-Lampe(n) während der Bewegung der Bestrahlungseinheit zum Bestrahlen des Materials an der Bestrahlungseinheit bewegbar ist/sind, zum Beispiel durch gesteuertes Verschwenken und/oder Translahieren während des Verfahrens der Bestrahlungseinheit.

In einer weiteren Ausgestaltung ist die UV-Bestrahlungseinrichtung ferner für ein Absaugen von bei dem Bestrahlen des Materials zum Härten der Beschichtung gebildeten Gasen eingerichtet. Auf diese Weise können die gebildeten Stoffe, zum Beispiel Ozon, von einer Bedienerperson ferngehalten und eine Verteilung dieser Stoffe in den Arbeitsräumen vermieden werden.

In einer Weiterbildung kann die UV-Lampe oder können die UV-Lampen jeweils ein Gehäuse aufweisen, welches in einem Innenraum desselben die UV-Strahlungsquelle aufnimmt, einen Strahlungsaustrittsbereich aufweist und für ein Absaugen von Luft aus dem Innenraum des Gehäuses ausgebildet ist. Hierdurch kann das Wegführen der bei der Bestrahlung gebildeten Stoffe in einfacher und wirkungsvoller Weise erreicht werden.

Insbesondere kann das Gehäuse der UV-Lampe jeweils länglich, beispielsweise nach Art eines länglichen und teilweise offenen Kastens, ausgebildet sein. Die UV-Strahlungsquelle kann beispielsweise ebenfalls länglich, etwa röhren- oder stabförmig, ausgebildet sein.

Das Gehäuse kann zudem als ein Reflektor eingerichtet sein, um die UV-Strahlung der UV-Strahlungsquelle auf das Material zu lenken, oder kann einen derartigen Reflektor aufnehmen. Somit kann die erzeugte UV-Strahlung noch besser ausgenutzt und mit der gewünschten Verteilung auf das Material gelenkt werden.

Erfindungsgemäß kann das Material an der Arbeitsstation unter Verwendung eines Formwerkzeugs der Thermoformung unterzogen werden. Hierbei ist die UV-Bestrahlungseinrichtung derart ausgebildet und angeordnet, dass das Material zum Härten der Beschichtung mittels der UV-Bestrahlungseinrichtung mit der UV-Strahlung bestrahlbar ist, während sich das Material auf dem Formwerkzeug befindet. Ein Bestrahlen des Materials zur UV-Härtung auf dem Formwerkzeug vor dem Entformen ermöglicht nicht nur ein Abstützen des umgeformten Materials und verhindert unerwünschte Verformungen beim Bestrahlen, sondern bietet auch die Möglichkeit, Wärme über das Formwerkzeug abzuleiten. Dies kann dazu beitragen, einem übermäßigen Erwärmen der Beschichtung und einer eventuellen Schädigung derselben bei der Bestrahlung vorzubeugen. Eine signifikante Beschleunigung des UV-Härtevorgangs kann erreicht werden.

In einer Ausgestaltung ist mittels der Bestrahlungseinheit durch Verfahren derselben die gesamte Formoberfläche des Formwerkzeugs mit der UV-Strahlung erreichbar, derart, dass eine Außenoberfläche des thermogeformten Materials zum Härten der Beschichtung mit der UV-Strahlung vollständig bestrahlt werden kann. In unerwünschter Weise unbestrahlte Formteilbereiche werden somit vermieden und es kann auf wirtschaftliche Weise ein Formteil hoher Qualität erzielt werden.

Erfindungsgemäß kann die Bestrahlungseinheit aus einer Ruhestellung derselben zum Bestrahlen des Materials in einen Arbeitsbereich der Arbeitsstation, in dem die Thermoformung des Materials durchführbar ist, hinein und über das Formwerkzeug mit dem darauf befindlichen Material hinweg bewegt werden. Insbesondere ist die Bestrahlungseinheit in deren Ruhestellung außerhalb des Arbeitsbereichs der Arbeitsstation angeordnet. Indem eine Ruhestellung für die Bestrahlungseinheit vorgesehen ist, kann vermieden werden, dass die Bestrahlungseinheit bei anderen Arbeitsgängen an der Arbeitsstation hinderlich ist.

Ferner ist erfindungsgemäß die Bestrahlungseinheit zumindest abschnittsweise über einen von der Ruhestellung aus gesehen distalen Rand des Formwerkzeugs hinaus verlagerbar. In einer Weiterbildung ist die Bestrahlungseinheit zumindest abschnittsweise über den von der Ruhestellung aus gesehen distalen Rand des Formwerkzeugs hinaus insbesondere verfahrbar. Hierdurch kann noch besser sichergestellt werden, dass die Außenoberfläche des umgeformten Materials vollständig mit der UV-Strahlung erreicht wird.

In einer Ausgestaltung ist die Arbeitsstation für eine Thermoformung des Materials nach dem Closed-Chamber-Prinzip ausgebildet. Als Closed-Chamber-Thermoformmaschinen werden Anlagen bezeichnet, deren Arbeitsstation ein geschlossenes und abgedichtetes Maschinengehäuse aufweist. Dies ermöglicht es, ein Durchhängen des erwärmten, thermozuformenden Materials durch die Wahl eines geeigneten Innendrucks zu vermeiden.

Insbesondere kann die erfindungsgemäße Anordnung zum Thermoformen die vorgeschlagene UV-Bestrahlungseinrichtung aufweisen.

Gemäß einer Ausgestaltung wird bei dem Bestrahlen das thermogeformte und nach dem Thermoformen auf dem Formwerkzeug verbliebene Material für das Härten der Beschichtung mit der UV-Strahlung bestrahlt. Das bereits mit der Zielgeometrie versehene Material wird somit durch das Formwerkzeug gut gestützt, wodurch bei der UV-Bestrahlung die Formteilgeometrie erhalten bleibt und Wärme gut abgeführt werden kann.

In einer weiteren Ausgestaltung wird während des Bestrahlens des Materials mit der UV-Strahlung am Formwerkzeug ein Unterdruck in der Weise aufrechterhalten, dass das Material bei dem Bestrahlen in Oberflächenkontakt mit dem Formwerkzeug bleibt. Durch einen guten Kontakt des Materials mit dem Formwerkzeug kann ein guter Wärmeübergang zwischen dem thermogeformten Material und dem Formwerkzeug erreicht werden, was die Wärmeabfuhr über das Formwerkzeug verbessert.

In einer Ausgestaltung wird das Bestrahlen des Materials mit der UV-Strahlung mittels der bewegbaren Bestrahlungseinheit durchgeführt, wobei sich die Bestrahlungseinheit während des Bestrahlens des Materials relativ zu dem Material bewegt. Mit einer derartigen Ausgestaltung kann die eingesetzte Anzahl an UV-Lampen gering gehalten werden, was Kosten sparen kann.

Alternativ kann in einer Ausgestaltung vorgesehen sein, dass das Bestrahlen des Materials mit der UV-Strahlung mittels der bewegbaren Bestrahlungseinheit durchgeführt wird, wobei die Bestrahlungseinheit zunächst in eine Arbeitsstellung derselben bewegt wird und während des Bestrahlens des Materials relativ zu dem Material ruht. Auf diese Weise kann beispielsweise mit einer geeigneten Anzahl an UV-Lampen das gesamte Material gleichzeitig mit der UV-Strahlung beaufschlagt werden, was dazu beitragen kann, den Härtevorgang in kurzer Zeit abzuschließen.

Insbesondere ist die Anordnung zum Thermoformen in einer Ausgestaltung als eine Einstation-Thermoformanordnung ausgebildet. Bei Einstation-Anordnungen werden die Arbeitsschritte zum Thermoformen des Materials zur Herstellung des Formteils, insbesondere das Erwärmen und Formen, an ein und derselben Arbeitsstation ausgeführt. Die Erfindung ermöglicht somit in effizienter und räumlich kompakter Weise die Durchführung eines zusätzlichen UV-Härtevorgangs an einer derartigen Arbeitsstation, was den Zeit- und Platzbedarf für die Herstellung der Formteile zu verringern hilft.

Ferner kann die Anordnung insbesondere zum Thermoformen des Materials unter Nutzung eines Vakuums oder Unterdrucks, somit zum Vakuumformen des Materials, ausgebildet sein. Hierbei kann das Formwerkzeug in der Weise luftdurchlässig ausgebildet sein, dass es für den Formvorgang unter Vakuum oder zumindest unter Unterdruck gesetzt werden kann, um das Material mit Hilfe des Umgebungsluftdrucks an das Formwerkzeug zu pressen.

Insbesondere ist das dem Thermoformen zu unterziehende Material mit einem Grundmaterial gebildet, wobei das Grundmaterial mit der UV-härtbaren Beschichtung, insbesondere einem UV-härtbaren Lack, beschichtet ist. Das Grundmaterial ist hierbei insbesondere als ein thermoplastisches Kunststoffmaterial ausgebildet.

Das Material ist ferner insbesondere als ein folien- oder plattenförmiges Ausgangsmaterial ausgebildet. Ein mit Hilfe der Thermoformung hergestelltes Formteil ist insbesondere dreidimensional geformt.

Sämtliche vorstehend erläuterten Ausgestaltungen und Weiterbildungen können jeweils auf die UV-Bestrahlungseinrichtung, die Anordnung zum Thermoformen und das Verfahren entsprechende Anwendung finden, wobei der Umfang der Erfindung durch die nachfolgenden Ansprüche definiert ist.

### INHALTSANGABE DER ZEICHNUNG

Nachfolgend wird die Erfindung anhand der in den schematischen Figuren angegebenen Ausführungsbeispiele näher erläutert. Hierbei zeigen
- Fig. 1: eine Vorderansicht einer Anordnung zum Thermoformen gemäß einem ersten Ausführungsbeispiel der Erfindung, wobei sich eine Bestrahlungseinheit einer UV-Bestrahlungseinrichtung in einer Ruhestellung befindet;
- Fig. 2: eine Draufsicht auf die Anordnung gemäß dem ersten Ausführungsbeispiel im Zustand der Fig. 1, wobei zusätzlich eine Heizeinrichtung während eines Heizvorgangs gezeigt ist;
- Fig. 3: eine Vorderansicht der Anordnung gemäß dem ersten Ausführungsbeispiel während eines UV-Härtevorgangs;
- Fig. 4: eine Draufsicht auf die Anordnung gemäß dem ersten Ausführungsbeispiel im Zustand der Fig. 3, wobei zusätzlich die Heizvorrichtung in deren Ruhestellung gezeigt ist;
- Fig. 5: eine schematische Querschnittsansicht eines mittels Thermoformen umzuformenden Materials mit einem Grundmaterial und einer UV-härtbaren Beschichtung zur Verwendung bei dem ersten Ausführungsbeispiel der Erfindung;
- Fig. 6: eine schematische Querschnittsansicht eines beispielhaften Formteils, welches sich nach dem Thermoformen unter Verwendung eines beispielhaften, ebenfalls schematisch skizzierten Formwerkzeugs noch auf dem Formwerkzeug befindet;
- Fig. 7: eine perspektivische Ansicht einer UV-Lampe der UVBestrahlungseinrichtung, wie sie bei dem ersten Ausführungsbeispiel vorgesehen ist, von der Seite eines Strahlungsaustrittsbereichs her gesehen;
- Fig. 8: eine weitere perspektivische Ansicht der in Fig. 7 gezeigten UV-Lampe;
- Fig. 9: eine noch weitere perspektivische Ansicht der UV-Lampe aus Fig. 7 von einer dem Strahlungsaustrittsbereich abgewandten Seite her gesehen;
- Fig. 10: eine ausschnittsweise Draufsicht auf eine Anordnung zum Thermoformen gemäß einem zweiten Ausführungsbeispiel der Erfindung, wobei sich eine Bestrahlungseinheit einer UVBestrahlungseinrichtung in einer Ruhestellung befindet;
- Fig. 11: eine ausschnittsweise Vorderansicht der Anordnung gemäß dem zweiten Ausführungsbeispiel mit der Bestrahlungseinheit in deren Ruhestellung;
- Fig. 12: eine ausschnittsweise Draufsicht auf die Anordnung gemäß dem zweiten Ausführungsbeispiel während eines UV-Härtevorgangs; und
- Fig. 13: eine ausschnittsweise Vorderansicht der Anordnung gemäß dem zweiten Ausführungsbeispiel im Zustand der Fig. 12.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen.

In den Figuren der Zeichnungen sind gleiche, funktionsgleiche und gleich wirkende Elemente, Merkmale und Komponenten - soweit nichts anderes ausgeführt ist - jeweils mit denselben Bezugszeichen versehen. Die Elemente der Zeichnungen sind nicht notwendigerweise maßstabsgetreu zueinander dargestellt.

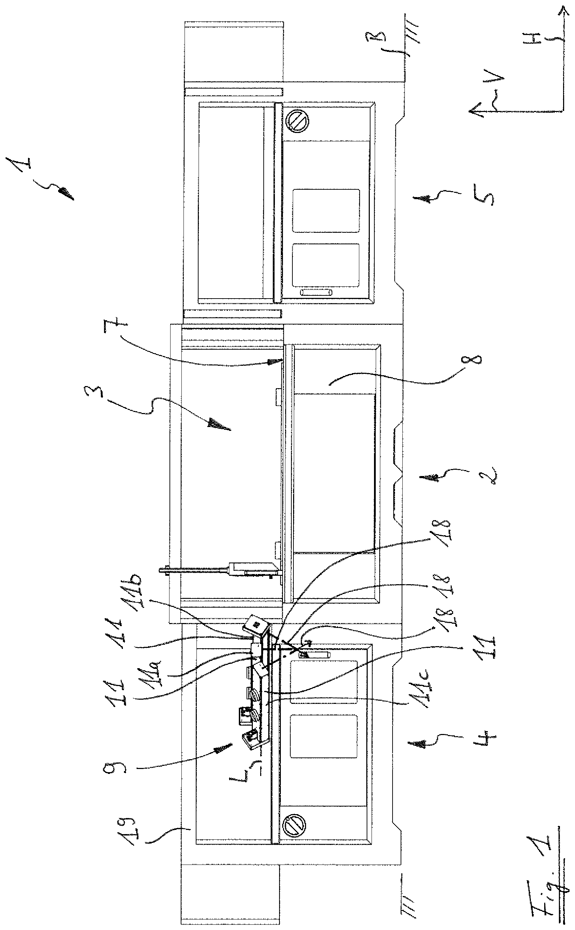

Die Fig. 1 bis 4 zeigen eine Anordnung 1 zum Thermoformen gemäß einem ersten Ausführungsbeispiel. Die Anordnung 1 ist für deren Betrieb auf einem im Wesentlichen horizontalen Boden B aufgestellt. Zur Verdeutlichung sind in Fig. 1 eine vertikale Richtung V und eine horizontale Richtung H angedeutet. Die Anordnung 1 umfasst bei dem ersten Ausführungsbeispiel eine Arbeitsstation 2 mit einem Arbeitsbereich 3 sowie eine UV-Bestrahlungseinrichtung 4, eine Beschickungsmaschine 5 und eine Heizeinrichtung 6. Ein in Fig. 1 nicht dargestelltes Material kann an der Arbeitsstation 2 in dem Arbeitsbereich 3 durch Thermoformen umgeformt werden. Die Anordnung 1 dient bei dem ersten Ausführungsbeispiel als eine automatische Thermoformanordnung dem Umformen thermoplastischer Kunststoffmaterialien.

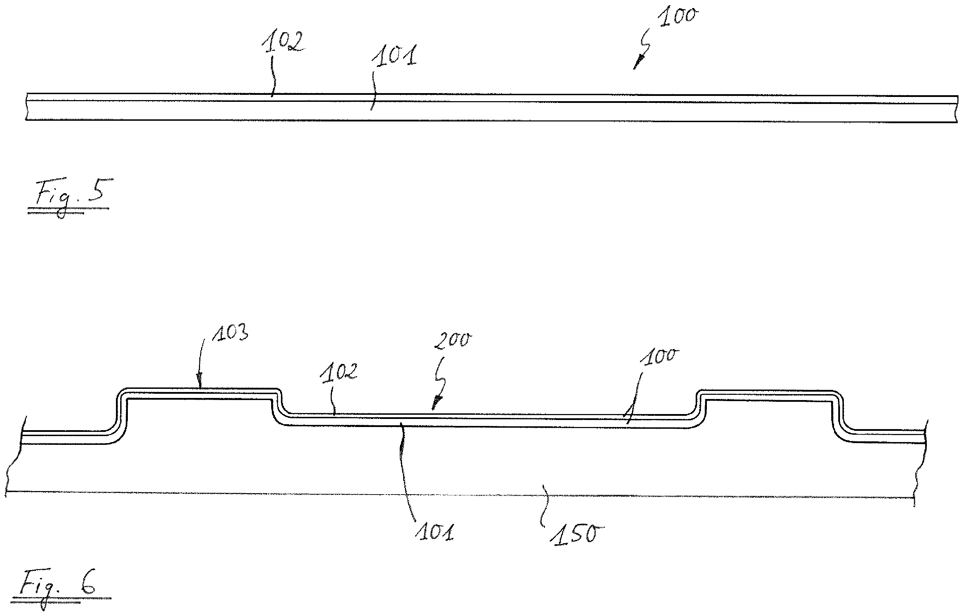

Ein in dem Arbeitsbereich 3 einem Thermoformen zu unterziehendes Material 100 ist in Fig. 5 schematisch und beispielhaft skizziert. Das als Ausgangsmaterial in dem Thermoformvorgang verwendete und oft relativ dünne Material 100 ist folien- oder plattenförmig ausgebildet und im Zustand der Fig. 5 noch nicht umgeformt. Das Material 100 weist ein flächiges Grundmaterial 101 auf, welches als ein thermoplastisches Kunststoffmaterial ausgebildet ist. Auf einer in Fig. 5 oberen Oberfläche des Grundmaterials 101 ist dieses mit einem UV-härtbaren Lack beschichtet, der eine UV-härtbare Beschichtung 102 des Materials 100 bildet.

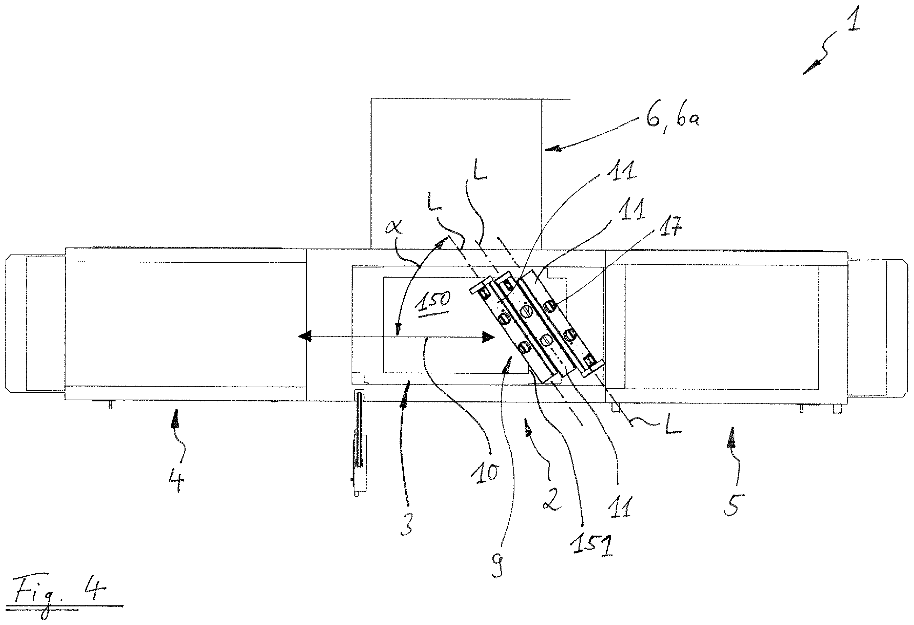

Das Material 100 wird in einem in der Beschickungsmaschine 5 angeordneten Magazin vorgehalten. Zum Herstellen eines Formteils wird das Material 100 aus dem Magazin entnommen, in einer in Fig. 1 horizontalen Einspannebene 7 in dem Arbeitsbereich 3 der Arbeitsstation 2 eingespannt, mittels der Heizeinrichtung 6 beheizt und über ein in Fig. 1 nicht gezeigtes, jedoch in Fig. 4 schematisch angedeutetes luftdurchlässiges Formwerkzeug 150 in dem Arbeitsbereich 3 gezogen. Das Formwerkzeug 150 wird anschließend mit einem Unterdruck oder Vakuum beaufschlagt, wodurch das Material 100 durch den Luftdruck in der Umgebungsatmosphäre auf eine Oberfläche des Formwerkzeugs 150 gepresst wird. Nach Abkühlen und Entformen liegt ein dreidimensionales Formteil vor. Die Anordnung 1 ist als eine Einstation-Thermoformanordnung ausgebildet, wobei insbesondere die Arbeitsgänge des Einspannens und Beheizens des Materials 100 und des Vakuum-Thermoformens desselben unter Verwendung des Formwerkzeugs 150 an derselben Arbeitsstation 2 durchgeführt werden.

Ferner ist die Arbeitsstation 2 des ersten Ausführungsbeispiels nach dem Closed-Chamber-Prinzip ausgebildet, mit anderen Worten, ein Maschinengehäuse 8 der Arbeitsstation 2 ist geschlossen und abgedichtet. Mittels einer geeigneten Wahl und Steuerung des Innendrucks im Maschinengehäuse 8 kann beispielsweise vermieden werden, dass das beheizte, erwärmte Material 100 durchhängt.

Das Formwerkzeug 150 und ein mittels desselben hergestelltes Formteil 200 sind in Fig. 6 beispielhaft schematisch dargestellt. Im Zustand der Fig. 6 befindet sich das umgeformte Material 100 des Formteils 200 nach Abschluss des Umformschrittes noch auf dem Formwerkzeug 150. Das Formteil 200 ist beispielhaft abschnittsweise nach oben gewölbt oder kuppelartig mit mehreren Erhebungen geformt.

Vor dem Entformen des Formteils 200 wird die Beschichtung 102 des thermogeformten Materials 100 unter UV-Bestrahlung ausgehärtet. Das Formteil 200 kann sehr geringe Wandstärken aufweisen und beispielsweise als ein Dekorteil ausgebildet sein, welches nach dem Entformen auf einer Spritzgießmaschine hinterspritzt wird, um ein fertiges Werkstück zu bilden. Das Formteil 200 stellt bei dem fertigen, in den Figuren nicht dargestellten Werkstück dann ein sichtbares Dekor dar, welches dem fertigen Werkstück in gewünschter Weise ein optisches Erscheinungsbild, haptische Eigenschaften und Kratzfestigkeit verleiht.

Mittels der UV-Bestrahlungseinrichtung 4 kann nach dem Thermoformen des Materials 100 das Material 100 an der Arbeitsstation 2 in dem Arbeitsbereich 3 mit UV-Strahlung bestrahlt werden, um die Beschichtung 102 zu härten. Während des UV-Härtevorgangs liegt das Material 100 noch auf dem Formwerkzeug 150 auf.

Nach Abschluss der UV-Härtung der Beschichtung 102 wird ein Entformvorgang ausgelöst. Das fertige Formteil 200 wird hierbei entformt und auf der Beschickungsmaschine 5 abgelegt und wird somit in Fig. 1 bis 4 nach rechts aus der Arbeitsstation 2 heraustransportiert.

Nachfolgend sollen die UV-Bestrahlungseinrichtung 4 der Anordnung 1 gemäß dem ersten Ausführungsbeispiel sowie deren Funktion unter Bezugnahme auf die Fig. 1 bis 4 und 7 bis 9 näher beschrieben werden.

Die UV-Bestrahlungseinrichtung 4 weist eine geradlinig entlang einer Verfahrrichtung 10 translatorisch verfahrbare Bestrahlungseinheit 9 auf. Die Verfahrrichtung 10 ist der horizontalen Richtung H im Wesentlichen parallel, wobei auch die Einspannebene 7 der Arbeitsstation 2 im Wesentlichen horizontal verläuft. Die Verfahrrichtung 10 ist somit auch im Wesentlichen parallel zu der Einspannebene 7.

Es sei erwähnt, dass in Varianten des ersten Ausführungsbeispiels die Bestrahlungseinheit 9 zusätzlich in weiteren Raumrichtungen verfahrbar sein könnte. Beispielsweise könnte eine zusätzliche translatorische Verfahrbarkeit parallel zu der vertikalen Richtung V und somit im Wesentlichen normal zu der Einspannebene 7 vorgesehen sein. Eine Bestrahlungseinheit 9, die lediglich ein Verfahren in nur einer Richtung erfordert, kann jedoch vorteilhaft in einfacher Weise aufgebaut sein und mit vergleichsweise geringem Aufwand für das Verfahren angetrieben werden.

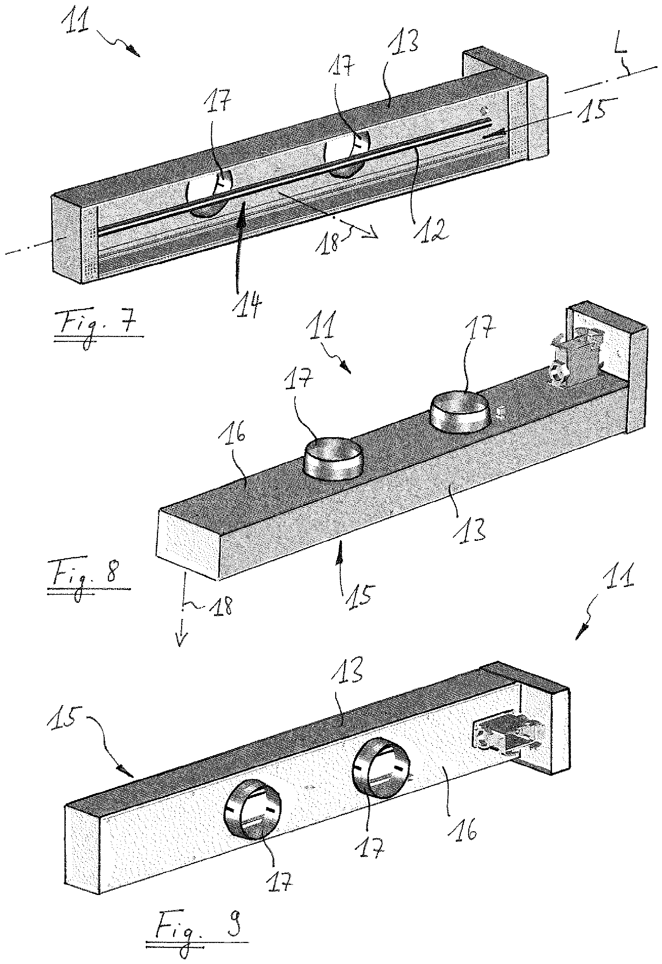

Die Bestrahlungseinheit 9 der UV-Bestrahlungseinrichtung 4 der Fig. 1 bis 4 ist mit drei länglichen UV-Lampen 11 ausgebildet. Die UV-Lampen 11 sind in den Fig. 7 bis 9 näher dargestellt. Jede der UV-Lampen 11 weist eine röhren- oder stabförmige, längliche UV-Strahlungsquelle 12 sowie ein Gehäuse 13 auf. Das Gehäuse 13 ist jeweils als ein länglicher, teilweise offener Kasten ausgeführt und nimmt in einem Innenraum 14 des Gehäuses 13 die UV-Strahlungsquelle 12 auf. Das Gehäuse 13 dient somit auch als Träger oder Halterung für die UV-Strahlungsquelle 12. Ferner kann das Gehäuse 13 als ein Reflektor, etwa als ein diffuser Reflektor, für die UV-Strahlung wirken.

Eine offene Längsseite des Gehäuses 13 bildet einen Strahlungsaustrittsbereich 15 für die UV-Strahlung. Auf einer dem Strahlungsaustrittsbereich 15 gegenüberliegenden Längsseite des Gehäuses 13 weist dieses eine rückseitige Wand 16 auf, die bei dem ersten Ausführungsbeispiel mit zwei voneinander beabstandet angeordneten, jeweils als Anschlussrohr ausgebildeten Anschlüssen 17 versehen ist. Die Anschlüsse 17 bilden jeweils einen Durchgang durch die ansonsten im Wesentlichen geschlossene Wand 16 aus.

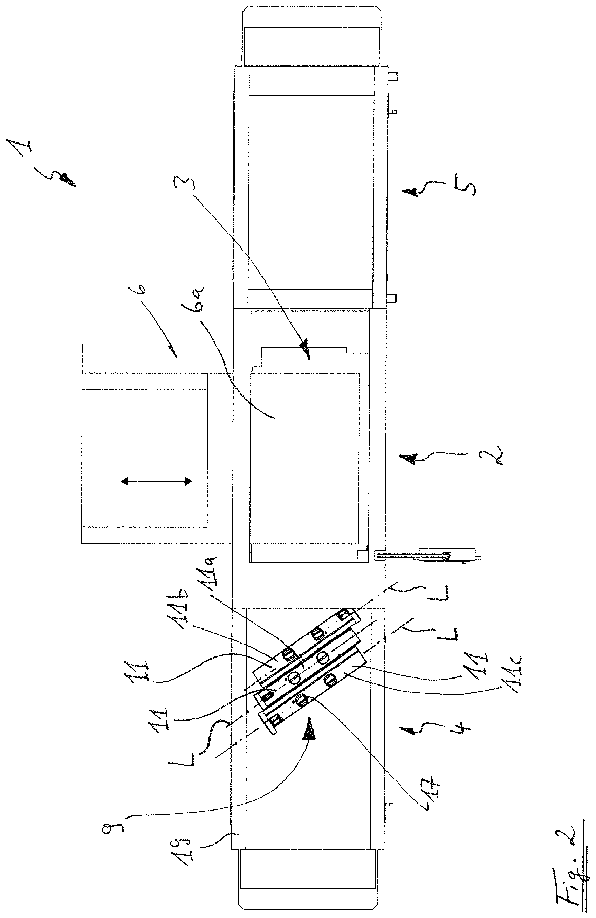

Eine Längsrichtung L der UV-Lampen 11 ist jeweils schräg zu der Verfahrrichtung 10 ausgerichtet, siehe z. B. Fig. 2 und 4. Ein Winkel α zwischen der Längsrichtung L und der Verfahrrichtung 10 kann beispielsweise zwischen etwa 30 Grad und etwa 60 Grad, oder zwischen etwa 45 Grad und etwa 60 Grad, betragen. Hierbei sind die UV-Lampen 11 der Bestrahlungseinheit 9 nebeneinander angeordnet, wobei die Längsrichtungen L der UV-Lampen 11 im Wesentlichen parallel zueinander und jeweils parallel zu der Einspannebene 7 ausgerichtet sind.

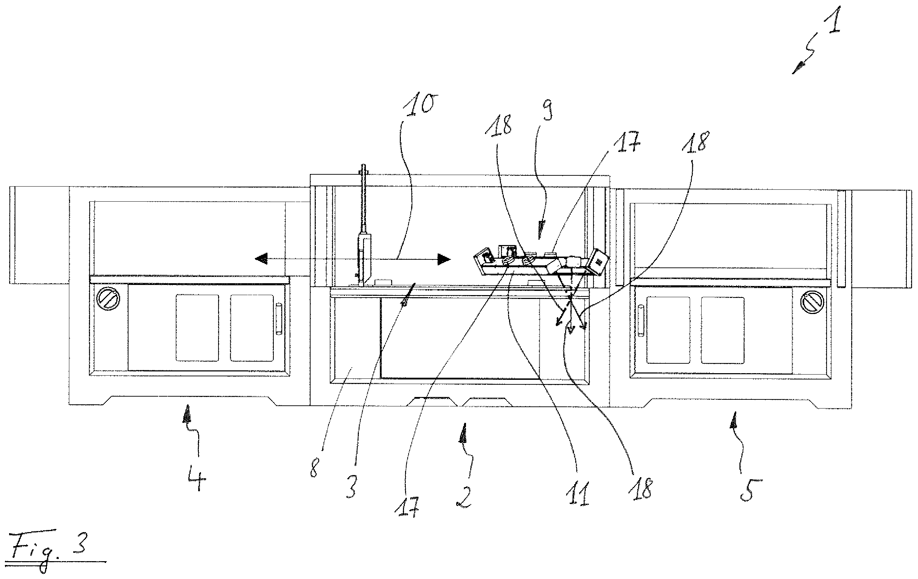

Im Betrieb strahlen die UV-Lampen 11 der Bestrahlungseinheit 9 zueinander geneigt UV-Strahlung ab. Hier sind die jeweils in gleicher Weise ausgebildeten drei UV-Lampen 11 bei dem ersten Ausführungsbeispiel als Teile der Bestrahlungseinheit 9 derart angeordnet, dass die mittlere UV-Lampe 11a mit ihrer Haupt-Strahlungsabgaberichtung 18 im Wesentlichen normal zu der Einspannebene 7 abstrahlt, während die beiden anderen UV-Lampen 11b, 11c, die jeweils auf einer Seite der mittleren UV-Lampe 11a angeordnet sind, derart ausgerichtet sind, dass deren Haupt-Strahlungsabgaberichtung 18 jeweils schräg in Bezug auf die Einspannebene 7 verläuft, siehe Fig. 1 und 3. Die UV-Lampen 11b und 11c sind hierzu relativ zu der UV-Lampe 11a um ihre Längsrichtung L jeweils verdreht in die Bestrahlungseinheit 9 eingebaut.

Die Heizeinrichtung 6 umfasst eine Infrarot-Heizeinheit 6a, die mit Infrarotstrahlern zur Beheizung des umzuformenden Materials 100 ausgestattet ist. Zum Beheizen des in der Einspannebene 7 eingespannten Materials 100 wird die Infrarot-Heizeinheit 6a in den Arbeitsbereich 3 der Arbeitsstation 2 hineingefahren, wodurch die Infrarotstrahler über das Material 100 gelangen und dieses für die nachfolgende Thermoformung erwärmen. Dies ist in Fig. 2 schematisch dargestellt.

Fig. 1 und 2 zeigen ferner, dass die Bestrahlungseinheit 9 beim Beschicken sowie während des Erwärmens des Materials 100 mittels der Infrarot-Heizeinheit 6a in einer Ruhestellung außerhalb des Arbeitsbereichs 3 angeordnet ist, in Fig. 1, 2 seitlich links der Arbeitsstation 2. Die Bestrahlungseinheit 9 ist hierbei in ihrer Ruhestellung innerhalb eines Gestells 19 der UV-Bestrahlungseinrichtung 4, die bei dem ersten Ausführungsbeispiel ein in den Fig. 1 und 2 an der linken Seite der Arbeitsstation 2 angefügtes Modul bildet, aufgenommen.

Das Thermoformen des Materials 100 erfolgt in dem Arbeitsbereich 3 mit Hilfe des Formwerkzeugs 150, welches in dem Arbeitsbereich 3 angeordnet ist, nachdem das Material 100 mittels der Infrarot-Heizeinheit 6a hinreichend erwärmt wurde. Vor dem eigentlichen Thermoformvorgang kann die Infrarot-Heizeinheit 6a aus dem Arbeitsbereich 3 heraus in eine Ruhestellung (Fig. 4) derselben gefahren werden.

Um die Beschichtung 102 zu härten, wird nach Beendigung des Thermoformvorgangs die Bestrahlungseinheit 9 aus der Ruhestellung der Fig. 1 und 2 in den Arbeitsbereich 3 hineingefahren. Zumindest während des Verfahrens der Bestrahlungseinheit 9 innerhalb des Arbeitsbereichs 3 sind die UV-Lampen 11 permanent in Betrieb, wobei auch ein Dauerbetrieb der UV-Lampen 11, auch in der Ruhestellung, vorgesehen sein kann. Bei dem Verfahren wird die Bestrahlungseinheit 9 über das Formwerkzeug 150 und über das auf dem Formwerkzeug 150 befindliche, umgeformte Material 100 hinwegbewegt. Die Bestrahlungseinheit 9 fährt somit aus der Ruhestellung in den Arbeitsbereich 3 hinein und bis über einen von der Ruhestellung aus gesehen distalen Rand 151 des Formwerkzeugs 150 hinaus. Dies ist in Fig. 4 skizziert, wobei das Formwerkzeug 150 in Fig. 4 nur schematisch und beispielhaft angedeutet ist. Während des Verfahrens der Bestrahlungseinheit 9 relativ zu dem Material 100 wird eine Außenoberfläche 103 des umgeformten Materials 100, siehe Fig. 6, allseitig mit der UV-Strahlung bestrahlt, die Bestrahlungseinheit 9 überstreicht somit das Material 100 und überfährt hierbei die gesamte Grundfläche des Formteils 200.

Die Bestrahlungseinheit 9 ist in Fig. 4 vollständig in den Arbeitsbereich 3 eingefahren und zudem über den Rand 151 hinausgefahren gezeigt. Anschließend fährt die Bestrahlungseinheit 9 in der entgegengesetzten Richtung wieder in Fig. 4 nach links aus dem Arbeitsbereich 3 heraus, zurück in die Ruhestellung der Bestrahlungseinheit 9.

Auf diese Weise wird beim Hinein- und Herausfahren der Bestrahlungseinheit 9 das Material 100 mittels der UV-Lampen 11, die schräg zur Verfahrrichtung 10 ausgerichtet sind und in unterschiedlichen Richtungen 18 UV-Strahlung auf das Material 100 abstrahlen, vollständig bestrahlt. Die seitlichen UV-Lampen 11b, 11c sind zudem in vertikaler Richtung V etwas tiefer als die mittlere UV-Lampe 11a neben dieser angeordnet. Insgesamt gelingt hierdurch eine zuverlässige UV-Härtung der Beschichtung 102 für das gesamte Formteil 200. Das Verfahren der Bestrahlungseinheit 9 kann zum Einhalten einer für das Härten der Beschichtung 102 gewählten, passenden Verfahrgeschwindigkeit automatisch gesteuert werden, sowohl beim Einfahren in die Arbeitsstation 2 als auch beim Herausfahren aus dieser.

Bei dem ersten Ausführungsbeispiel sind die UV-Lampen 11 mit fester Ausrichtung und Position an der Bestrahlungseinheit 9 in diese eingebaut. Die Ausrichtung der UV-Lampen 11 ist in Bezug auf die Einspannebene 7 und die Verfahrrichtung 10 bei dem ersten Ausführungsbeispiel in der Weise gewählt, dass das geradlinige Hinein- und Herausfahren der Bestrahlungseinheit 9 in den bzw. aus dem Arbeitsbereich 3 bei fester Winkelstellung der UV-Lampen 11 eine vollständige Bestrahlung der Außenoberfläche 103 von allen Seiten für die in Betracht kommenden Formteile 200 ermöglicht. Die bei dem ersten Ausführungsbeispiel vorgesehene Bestrahlungseinheit 9 mit drei in unterschiedliche Hauptabstrahlrichtungen 18 abstrahlenden UV-Lampen 11 ermöglicht auf wirksame Weise eine umfassende Bestrahlung vielfältiger Arten von Formteilen 200 mit einer relativ geringen Anzahl von UV-Lampen 11 und mit einem relativ einfachen mechanischen Aufbau.

Bei der UV-Bestrahlung des Materials 100 zur Härtung der Beschichtung 102 kann durch die Wirkung der UV-Strahlung auf die Umgebungsluft beispielsweise Ozon entstehen. Bei der Anordnung 1 gemäß dem ersten Ausführungsbeispiel wird durch die Anschlussrohre 17 der UV-Lampen 11 Luft aus dem Innenraum 14 des Gehäuses 13 abgesaugt, die durch den Strahlungsaustrittsbereich 15 nachströmen kann. Auf diese Weise können auch die unter der Strahlungseinwirkung gebildeten Stoffe wie etwa das Ozon wirkungsvoll abgeführt werden. Zu diesem Zweck können geeignete Absaugleitungen an die Anschlüsse 17 angeschlossen sein. Während des Betriebs der UV-Lampen 11 erfolgt bevorzugt ein permanentes Absaugen durch die Anschlüsse 17.

Bei dem ersten Ausführungsbeispiel wird während der UV-Bestrahlung des Materials 100 am Formwerkzeug 150 ein Unterdruck oder Vakuum aufrechterhalten. Auf diese Weise wird sichergestellt, dass das bereits umgeformte Material 100 bei der UV-Bestrahlung in Oberflächenkontakt mit dem Formwerkzeug 150 bleibt. Hierdurch kann ein guter Wärmeübergang während der Bestrahlung von dem Material 100 in das Formwerkzeug 150 und somit eine gute Wärmeableitung erreicht werden.

Die Steuerung der UV-Bestrahlungseinrichtung 4, einschließlich des Verfahrens der Bestrahlungseinheit 9, der Steuerung der Strahlungsabgabe durch die UV-Lampen 11 und der Steuerung der Luftabsaugung, kann insbesondere mittels einer zentralen Maschinensteuerung (SPS) der Gesamtanordnung 1 erfolgen.

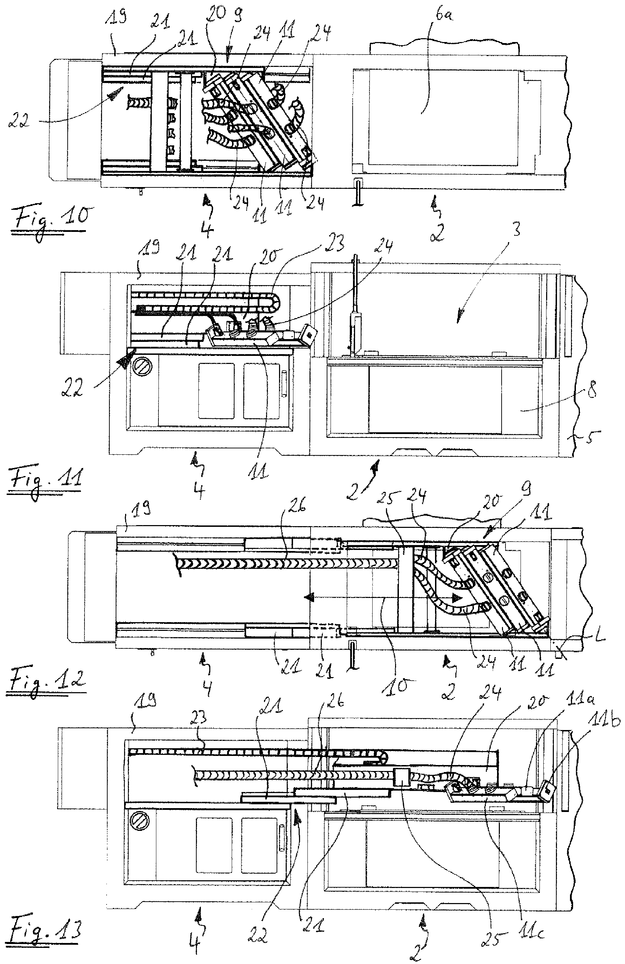

Nachfolgend soll ein zweites Ausführungsbeispiel der Erfindung unter Bezugnahme auf die Fig. 10 bis 13 näher erläutert werden. Die vorstehenden Erläuterungen zu dem ersten Ausführungsbeispiel sind sämtlich auch auf das zweite Ausführungsbeispiel anwendbar, so dass diesbezüglich auf die obigen Ausführungen verwiesen wird.

Bei dem zweiten Ausführungsbeispiel ist die Bestrahlungseinheit 9 als ein längs der Verfahrrichtung 10 verfahrbarer UV-Härtewagen 20 ausgebildet. Der UV-Härtewagen 20 wird von dem Gestell 19 verfahrbar getragen. Die UV-Lampen 11 gemäß Fig. 7-9 sind bei dem zweiten Ausführungsbeispiel mit fester Ausrichtung und Position relativ zu dem UV-Härtewagen 20 mit dem UV-Härtewagen 20 verbunden und werden von diesem getragen.

Der UV-Härtewagen 20 fährt in gleicher Weise wie weiter oben für die Bestrahlungseinheit 9 beschrieben in die Arbeitsstation 2 ein und aus dieser heraus, um das UV-Härten der Beschichtung 102 herbeizuführen. Fig. 10-13 zeigen, dass bei dem zweiten Ausführungsbeispiel der UV-Härtewagen 20 über mehrere teleskopartig geradlinig zueinander verschiebbare Trägerkomponenten 21 linear verfahrbar ist. Die einzelnen Trägerkomponenten 21 sind hierbei beispielhaft über nicht im Detail eingezeichnete Schienen aneinander und an dem Gestell 19 verschiebbar abgestützt, etwa unter Verwendung von auf den Schienen laufenden Rollen. Die Fig. 12 und 13 zeigen den mit den Trägerkomponenten 21 gebildeten Verfahrmechanismus 22 in komplett ausgefahrenem Zustand, in dem der UV-Härtewagen 20 vollständig in den Arbeitsbereich 3 eingefahren ist.

Der Antrieb des UV-Härtewagens 20 für das Verfahren desselben kann beispielsweise mittels eines oder mehrerer Elektromotoren oder alternativ mittels eines oder mehrerer hydraulischer oder pneumatischer Zylinder bewerkstelligt werden. Zur Erzeugung der Verfahrbewegung können zudem beispielhaft eine Spindeltriebanordnung, ein Koppelgetriebe oder ein Zahnstangengetriebe, oder eine Kombination dieser, zum Einsatz kommen.

Die modulartige UV-Bestrahlungseinrichtung 4 der Fig. 10 bis 13 kann zudem nicht im Einzelnen dargestellte Einrichtungen zur Versorgung der UV-Lampen 11 mit elektrischem Strom, sowie zur Versorgung der jeweils vorgesehenen Antriebseinrichtungen für den UV-Härtewagen 20 mit elektrischem Strom und/oder geeigneten Antriebsmedien, zum Beispiel Druckluft oder Hydraulikflüssigkeit, umfassen.

Die elektrische Versorgung des bewegbaren UV-Härtewagens 20, insbesondere mit elektrischem Strom für die UV-Lampen 11, erfolgt bei dem Beispiel der Fig. 10 bis 13 über eine Energieführungskette 23, die geeignete, flexible Versorgungskabel aufnimmt.

Für das Absaugen von Luft über die Anschlüsse 17, wie oben bereits zu dem ersten Ausführungsbeispiel beschrieben, ist an die Anschlüsse 17 jeweils ein Schlauch 24 angeschlossen, über den die Luft abgesaugt werden kann. Zur besseren Übersicht sind in den Fig. 10 bis 13 nur einige Schläuche 24 und diese nur teilweise dargestellt, bevorzugt wird jedoch über alle vorhandenen Anschlüsse 17 Luft abgesaugt. Ein entsprechende Absaugeinrichtung, zum Beispiel ein Gebläse, kann ebenfalls in der UV-Bestrahlungseinrichtung 4 untergebracht sein.

Die Schläuche 24 können jeweils einzeln zu der Absaugeinrichtung geführt werden, oder es werden die abgesaugten Luftströme zunächst in einer Sammeleinrichtung 25 vereinigt und von dort gemeinsam über eine Schlauchleitung 26 weggeführt. Die UV-Bestrahlungseinrichtung 4 kann zudem Einrichtungen für das Führen der Schläuche 24 und/oder der Schlauchleitung 26 beim Verfahren des UV-Härtewagens 20 beinhalten, wodurch sichergestellt wird, dass die Schläuche 24 bzw. die Schlauchleitung 26 nicht abgeknickt oder eingeklemmt werden.

Ähnlich wie im Falle der Energieführungskette 23 könnte zum Beispiel zur Führung der Schläuche 24, 26, und, sofern erforderlich, zur Führung von Leitungen zur Versorgung von Antriebseinrichtungen zum Antrieb des Härtewagens 20, ebenfalls eine Führungskette zur Anwendung kommen.

Bei allen vorstehend erläuterten Ausführungsbeispielen kann mittels der Bestrahlungseinheit 9 durch Verfahren derselben die gesamte Formoberfläche des Formwerkzeugs 150 mit der UV-Strahlung bestrichen werden, wodurch die UV-Härtung der Beschichtung 102 nach dem Thermoformen auf der ganzen Außenoberfläche 103 des Materials 100 erfolgen kann.

In Varianten der vorstehenden Ausführungsbeispiele kann alternativ vorgesehen sein, dass die Bestrahlungseinheit 9 nach dem Thermoformvorgang zunächst in die Arbeitsstation 2 eingefahren wird, bis sie ein Arbeitsstellung erreicht hat, wobei die Bestrahlungseinheit 9 daraufhin in dieser Arbeitsstellung verweilt und erst dann die UV-Lampen 11 aktiviert werden. Bei derartigen Varianten können mehr als die bezüglich der Figuren 1 bis 4 und 10 bis 13 beschriebenen drei UV-Lampen 11 vorgesehen und ggf. anders als diese ausgerichtet sein, um das gesamte Material 100 aus einer Arbeitsstellung der Bestrahlungseinheit 9 heraus bestrahlen zu können.

In weiteren Varianten der vorstehend beschriebenen Ausführungsbeispiele können die UV-Lampen 11 jeweils verstellbar oder ausrichtbar sein. Beispielsweise können die UV-Lampen 11 über deren Gehäuse 13 jeweils durch Schwenken zum Beispiel um die Längsrichtung L einstellbar an dem UV-Härtewagen 20 befestigt sein, um ein Einstellen der Haupt-Strahlungsabgaberichtung 18 und somit des Abstrahlwinkels in Bezug auf die Einspannebene 7 zu ermöglichen. Ferner können in entsprechenden Varianten die UV-Lampen 11 translatorisch verstellbar vorgesehen sein, zum Beispiel können die UV-Lampen 11 an dem UV-Härtewagen 20 durch Verschieben einstellbar befestigt sein. Die Schwenk- und/oder Verschiebeverstellung kann manuell erfolgen oder mittels zugeordneter, in den Figuren nicht dargestellter Aktuatoren, die über die Maschinensteuerung angesprochen werden.

In weiteren Varianten der vorstehenden Ausführungsbeispiele kann der UV-Härtewagen 20 beispielsweise Aktuatoren tragen, die ein Bewegen der UV-Lampen 11 durch Verschwenken und/oder translatorisches Bewegen während des Verfahrens des UV-Härtewagens 20 ermöglichen, um das thermogeformte Material 100 noch flexibler bestrahlen zu können. Zum Beispiel könnten in einer Variante die UV-Lampen 11 zusätzlich in vertikaler Richtung V an dem UV-Härtewagen 20 verfahrbar sein.

Insbesondere sei erwähnt, dass die UV-Bestrahlungseinrichtung 4 bei allen vorstehend erläuterten Ausführungsbeispielen als integraler Teil einer Gesamtmaschine oder als an die Arbeitsstation 2 ankoppelbares UV-Bestrahlungsmodul oder UV-Härtemodul vorgesehen sein kann. Das UV-Bestrahlungs- oder -Härtemodul kann auch dafür eingerichtet sein, eine die Arbeitsstation 2 aufweisende Thermoformmaschine durch Ankoppeln des UV-Bestrahlungs- oder Härtemoduls nachzurüsten.

Obwohl die Erfindung vorstehend anhand bevorzugter Ausführungsbeispiele vollständig beschrieben wurde, ist sie nicht darauf beschränkt, sondern kann auf vielfältige Art und Weise modifiziert werden.

Beispielsweise kann die Bewegbarkeit der Bestrahlungseinheit alternativ in anderer Weise als vorstehend beschrieben erreicht werden, zum Beispiel mit Hilfe eines verschwenkbaren Arms, der beispielhaft in einer horizontalen oder vertikalen Ebene verschwenken kann.

### Liste der Bezugszeichen

- 1: Anordnung zum Thermoformen
- 2: Arbeitsstation
- 3: Arbeitsbereich
- 4: UV-Bestrahlungseinrichtung
- 5: Beschickungsmaschine
- 6: Heizeinrichtung
- 6a: Infrarot-Heizeinheit
- 7: Einspannebene
- 8: Maschinengehäuse
- 9: Bestrahlungseinheit
- 10: Verfahrrichtung
- 11: UV-Lampe
- 11a: UV-Lampe
- 11b: UV-Lampe
- 11c: UV-Lampe
- 12: UV-Strahlungsquelle
- 13: Gehäuse
- 14: Innenraum
- 15: Strahlungsaustrittsbereich
- 16: rückseitige Wand
- 17: Anschluss
- 18: Haupt-Strahlungsabgaberichtung
- 19: Gestell
- 20: UV-Härtewagen
- 21: Trägerkomponenten
- 22: Verfahrmechanismus
- 23: Energieführungskette
- 24: Schlauch
- 25: Sammeleinrichtung
- 26: Schlauchleitung
- 100: Material
- 101: Grundmaterial
- 102: UV-härtbare Beschichtung
- 103: Außenoberfläche
- 150: Formwerkzeug
- 151: distaler Rand
- 200: Formteil

- B: Boden
- H: horizontale Richtung
- L: Längsrichtung (UV-Lampe)
- V: vertikale Richtung
- α: Winkel

## Patentansprüche

1. Anordnung (1) zum Thermoformen,
mit einer Arbeitsstation (2), an der ein Material (100) einer Thermoformung unterzogen werden kann, und mit einer UV-Bestrahlungseinrichtung (4), die dafür eingerichtet ist, eine UV-härtbare Beschichtung (102) des Materials (100) an der Arbeitsstation (2) mit UV-Strahlung zu bestrahlen, um die UV-härtbare Beschichtung (102) des Materials (100) mittels der UV-Strahlung zu härten;
wobei die UV-Bestrahlungseinrichtung (4) mit einer bewegbaren Bestrahlungseinheit (9) ausgebildet ist;
wobei das Material (100) an der Arbeitsstation (2) unter Verwendung eines Formwerkzeugs (150) der Thermoformung unterzogen werden kann und die UV-Bestrahlungseinrichtung (4) derart ausgebildet und angeordnet ist, dass das Material (100) zum Härten der Beschichtung (102) mittels der UV-Bestrahlungseinrichtung (4) mit der UV-Strahlung bestrahlbar ist, während sich das Material (100) auf dem Formwerkzeug (150) befindet;
wobei die Bestrahlungseinheit (9) aus einer Ruhestellung derselben zum Bestrahlen des Materials (100) in einen Arbeitsbereich (3) der Arbeitsstation (2), in dem die Thermoformung des Materials (100) durchführbar ist, hinein und über das Formwerkzeug (150) mit dem darauf befindlichen Material (100) hinweg bewegt werden kann;
wobei die Bestrahlungseinheit (9) verfahrbar angeordnet ist und die UV-Bestrahlungseinrichtung (4) mindestens eine längliche UV-Lampe (11) aufweist, die derart angeordnet ist, dass eine Längsrichtung (L) der UV-Lampe (11) zu einer Verfahrrichtung (10) der Bestrahlungseinheit (9) schräg ausgerichtet ist; und wobei die Bestrahlungseinheit (9) zumindest abschnittsweise über einen von der Ruhestellung aus gesehen distalen Rand (151) des Formwerkzeugs (150) hinaus verlagerbar ist.

2. Anordnung zum Thermoformen nach Anspruch 1, **dadurch gekennzeichnet, dass** die UV-Bestrahlungseinrichtung (4) dafür ausgebildet ist, das Material (100) nach der Thermoformung desselben zum Härten der Beschichtung (102) mit der UV-Strahlung zu bestrahlen.

3. Anordnung zum Thermoformen nach Anspruch 1 oder 2, **dadurch gekennzeichnet, dass** die bewegbare Bestrahlungseinheit (9) mindestens eine UV-Strahlungsquelle (12) aufweist.

4. Anordnung zum Thermoformen nach einem der vorstehenden Ansprüche, **dadurch gekennzeichnet, dass** mittels der Bestrahlungseinheit (9) durch Verfahren derselben die gesamte Formoberfläche des Formwerkzeugs (150) mit der UV-Strahlung erreichbar ist, derart, dass eine Außenoberfläche (103) des thermogeformten Materials (100) zum Härten der Beschichtung (102) mit der UV-Strahlung vollständig bestrahlt werden kann.

5. Anordnung zum Thermoformen nach einem der vorstehenden Ansprüche, **dadurch gekennzeichnet, dass** die Bestrahlungseinheit (9) zumindest abschnittsweise über den von der Ruhestellung aus gesehen distalen Rand (151) des Formwerkzeugs (150) hinaus verfahrbar ist.

6. Anordnung zum Thermoformen nach einem der vorstehenden Ansprüche, **dadurch gekennzeichnet, dass** die Arbeitsstation (2) für eine Thermoformung des Materials (100) nach dem Closed-Chamber-Prinzip ausgebildet ist.

7. Anordnung zum Thermoformen nach einem der vorstehenden Ansprüche, **dadurch gekennzeichnet, dass** die UV-Bestrahlungseinrichtung (4) mehrere längliche UV-Lampen (11) aufweist, die im Wesentlichen nebeneinander angeordnet sind, deren Längsrichtung (L) jeweils schräg zu der Verfahrrichtung (10) der Bestrahlungseinheit (9) verläuft, und die im Betrieb zueinander geneigt UV-Strahlung abstrahlen.

8. Anordnung zum Thermoformen nach einem der vorstehenden Ansprüche, **dadurch gekennzeichnet, dass** die UV-Bestrahlungseinrichtung (4) ferner für ein Absaugen von bei dem Bestrahlen des Materials (100) zum Härten der Beschichtung (102) gebildeten Gasen eingerichtet ist.

9. Verfahren zum Herstellen eines Formteils (200) mittels einer Anordnung (1) gemäß einem der vorstehenden Ansprüche, wobei das Verfahren ein Thermoformen eines Materials (100) unter Verwendung eines Formwerkzeugs (150) umfasst, und wobei eine UV-härtbare Beschichtung (102) des Materials (100) durch Bestrahlen mit UV-Strahlung gehärtet wird, während sich das Material (100) auf dem Formwerkzeug (150) befindet.

10. Verfahren nach Anspruch 9, **dadurch gekennzeichnet, dass** bei dem Bestrahlen das thermogeformte und nach dem Thermoformen auf dem Formwerkzeug (150) verbliebene Material (100) für das Härten der Beschichtung (102) mit der UV-Strahlung bestrahlt wird.

11. Verfahren nach Anspruch 9 oder 10, **dadurch gekennzeichnet, dass** während des Bestrahlens des Materials (100) mit der UV-Strahlung am Formwerkzeug (150) ein Unterdruck in der Weise aufrechterhalten wird, dass das Material (100) bei dem Bestrahlen in Oberflächenkontakt mit dem Formwerkzeug (150) bleibt.

## Claims

1. Assembly (1) for thermoforming,
comprising a workstation (2) at which a material (100) can be subjected to thermoforming and comprising a UV irradiation device (4) set up to irradiate a UV-curable coating (102) of the material (100) with UV radiation at the workstation (2) so as to cure the UV-curable coating (102) of the material (100) using the UV radiation; wherein the UV irradiation device (4) is formed with a movable irradiation unit (9);
wherein the material (100) can be subjected to the thermoforming at the workstation (2) using a forming tool (150), and the UV irradiation device (4) is formed and arranged in such a way that the material (100) can be irradiated with the UV radiation using the UV irradiation device (4) so as to cure the coating (102) while the material (100) is located on the forming tool (150); wherein to irradiate the material (100) the irradiation unit (9) can be moved from a rest position thereof into a working region (3) of the workstation (2), in which region the thermoforming of the material (100) can be carried out, and over the forming tool (150) with the material (100) located thereon;
wherein the irradiation unit (9) is arranged displaceably and the UV irradiation device (4) has at least one elongate UV lamp (11), which is arranged in such a way that a longitudinal direction (L) of the UV lamp (11) is orientated obliquely with respect to a displacement direction (10) of the irradiation unit (9); and
wherein the irradiation unit (9) can be shifted, at least in portions, beyond a distal edge (151), as seen from the rest position, of the moulding tool (150).

2. Assembly for thermoforming according to claim 1, **characterised in that** the UV irradiation device (4) is formed to irradiate the material (100) with the UV radiation after the thermoforming thereof so as to cure the coating (102).

3. Assembly for thermoforming according to either claim 1 or claim 2, **characterised in that** the movable irradiation unit (9) has at least one UV radiation source (12).

4. Assembly for thermoforming according to any of the preceding claims, **characterised in that** by means of the irradiation unit (9), by displacing said unit, the entire forming surface of the forming tool (150) can be reached with the UV radiation, in such a way that the outer surface (103) of the thermoformed material (100) can be irradiated completely with the UV radiation to cure the coating (102).

5. Assembly for thermoforming according to any of the preceding claims, **characterised in that** the irradiation unit (9) can be displaced at least in portions beyond the distal edge (151), as seen from the rest position, of the forming tool (150).

6. Assembly for thermoforming according to any of the preceding claims, **characterised in that** the workstation (2) is formed for closed-chamber thermoforming of the material (100) .

7. Assembly for thermoforming according to any of the preceding claims, **characterised in that** the UV irradiation device (4) has a plurality of elongate UV lamps (11), which are arranged substantially side by side, the longitudinal direction (L) of each of which extends obliquely with respect to the displacement direction (10) of the irradiation unit (9), and which emit UV radiation at an inclination to one another during operation.

8. Assembly for thermoforming according to any of the preceding claims, **characterised in that** the UV irradiation device (4) is further set up to suction gases formed during the irradiation of the material (100) for curing the coating (102).

9. Method for manufacturing a shaped part (200) using an arrangement (1) according to any of the preceding claims, wherein the method comprises thermoforming a material (100) using a moulding tool (150), and wherein a UV-curable coating (102) of the material (100) is cured by irradiation with UV radiation while the material (100) is located on the forming tool (150).

10. Method according to claim 9, **characterised in that**, during the irradiation, the thermoformed material (100) left on the forming tool (150) after the thermoforming is irradiated with the UV radiation to cure the coating (102).

11. Method according to either claim 9 or claim 10, **characterised in that** during the irradiation of the material (100) with the UV radiation at the forming tool (150) a negative pressure is maintained in such a way that the material (100) remains in surface contact with the forming tool (150) during the irradiation.

## Revendications

1. Agencement (1) pour le thermoformage,
comportant un poste de travail (2), auquel un matériau (100) peut être soumis à un thermoformage, et un dispositif d'irradiation UV (4) qui est conçu pour irradier un revêtement durcissable par UV (102) du matériau (100) au poste de travail (2) avec un rayonnement UV, afin de durcir le revêtement durcissable par UV (102) du matériau (100) au moyen du rayonnement UV ;
dans lequel le dispositif d'irradiation UV (4) est réalisé avec une unité d'irradiation mobile (9) ;
dans lequel le matériau (100) peut être soumis au thermoformage au poste de travail (2) en utilisant un outil de moulage (150) et le dispositif d'irradiation UV (4) est conçu et disposé de telle sorte que le matériau (100) puisse être irradié avec le rayonnement UV pour durcir le revêtement (102) au moyen du dispositif d'irradiation UV (4) tandis que le matériau (100) se trouve sur l'outil de moulage (150) ;
dans lequel l'unité d'irradiation (9) peut être déplacée à partir d'une position de repos de celle-ci pour irradier le matériau (100) dans une zone de travail (3) du poste de travail (2) dans laquelle le thermoformage du matériau (100) peut être effectué, et au-dessus de l'outil de moulage (150) avec le matériau (100) se trouvant sur celui-ci ;
dans lequel l'unité d'irradiation (9) est disposée de manière déplaçable et le dispositif d'irradiation UV (4) présente au moins une lampe UV allongée (11) qui est disposée de telle sorte qu'une direction longitudinale (L) de la lampe UV (11) soit orientée obliquement par rapport à une direction de déplacement (10) de l'unité d'irradiation (9) ; et
dans lequel l'unité d'irradiation (9) peut être déplacée au moins sur certaines parties au-delà d'un bord (151) de l'outil de moulage (150) qui est distal vu depuis la position de repos.

2. Agencement pour le thermoformage selon la revendication 1, **caractérisé en ce que** le dispositif d'irradiation UV (4) est conçu pour irradier le matériau (100) avec le rayonnement UV après son thermoformage afin de durcir le revêtement (102).

3. Agencement pour le thermoformage selon la revendication 1 ou 2, **caractérisé en ce que** l'unité d'irradiation mobile (9) présente au moins une source de rayonnement UV (12).

4. Agencement pour le thermoformage selon l'une des revendications précédentes, **caractérisé en ce que**, par le déplacement de l'unité d'irradiation (9), toute la surface de moulage de l'outil de moulage (150) peut être atteinte par le rayonnement UV, de sorte qu'une surface extérieure (103) du matériau thermoformé (100) peut être complètement irradiée avec le rayonnement UV pour durcir le revêtement (102) .

5. Agencement pour le thermoformage selon l'une des revendications précédentes, **caractérisé en ce que** l'unité d'irradiation (9) peut être déplacée au moins sur certaines parties au-delà du bord (151) de l'outil de moulage (150) qui est distal vu depuis la position de repos.

6. Agencement pour le thermoformage selon l'une des revendications précédentes, **caractérisé en ce que** le poste de travail (2) est conçu pour un thermoformage du matériau (100) selon le principe de la chambre fermée.

7. Agencement pour le thermoformage selon l'une des revendications précédentes, **caractérisé en ce que** le dispositif d'irradiation UV (4) présente plusieurs lampes UV allongées (11) qui sont disposées sensiblement côte à côte, dont la direction longitudinale (L) s'étend respectivement obliquement par rapport à la direction de déplacement (10) de l'unité d'irradiation (9) et qui, en fonctionnement, émettent un rayonnement UV en étant inclinées les unes par rapport aux autres.

8. Agencement pour le thermoformage selon l'une des revendications précédentes, **caractérisé en ce que** le dispositif d'irradiation UV (4) est en outre conçu pour aspirer les gaz formés lors de l'irradiation du matériau (100) pour durcir le revêtement (102).

9. Procédé de fabrication d'une pièce moulée (200) au moyen d'un agencement (1) selon l'une des revendications précédentes, le procédé comprenant le thermoformage d'un matériau (100) en utilisant un outil de moulage (150), et dans lequel un revêtement durcissable par UV (102) du matériau (100) est durci par irradiation avec un rayonnement UV tandis que le matériau (100) se trouve sur l'outil de moulage (150).

10. Procédé selon la revendication 9, **caractérisé en ce que**, lors de l'irradiation, le matériau (100) thermoformé et restant sur l'outil de moulage (150) après le thermoformage est irradié avec le rayonnement UV pour le durcissement du revêtement (102).

11. Procédé selon la revendication 9 ou 10, **caractérisé en ce que**, pendant l'irradiation du matériau (100) avec le rayonnement UV, une dépression est maintenue sur l'outil de moulage (150) de telle sorte que le matériau (100) reste en contact de surface avec l'outil de moulage (150) lors de l'irradiation.
